Europäisches Patentamt

(19) European Patent Office

Office européen des brevets

(11) Publication number: **0 380 553 B1**

# EUROPEAN PATENT SPECIFICATION

(12)

(45) Date of publication of patent specification :
23.10.91 Bulletin 91/43

(51) Int. Cl.⁵ : **G01L 5/04**

(21) Application number : 88908776.3

(22) Date of filing : 27.09.88

(86) International application number :
**PCT/SE88/00498**

(87) International publication number :
**WO 89/03025 06.04.89 Gazette 89/08**

(54) **A DEVICE FOR MEASURING TENSION FORCES IN CHAINS.**

(30) Priority : 01.10.87 SE 8703791

(43) Date of publication of application :
**08.08.90 Bulletin 90/32**

(45) Publication of the grant of the patent :
**23.10.91 Bulletin 91/43**

(84) Designated Contracting States :
**DE FR GB**

(56) References cited :
**DE-B- 2 755 428**

(56) References cited :
**GB-A- 1 426 965**
**US-A- 3 885 428**
**US-A- 4 283 942**
**US-A- 4 566 339**

(73) Proprietor : **GUNNEBO CHAIN & LIFTING AB**
**S-730 60 Ramnäs (SE)**

(72) Inventor : **WIER, Per-Ulrik**
**Rovdjursgatan 12**
**S-722 42 Västeras (SE)**

(74) Representative : **Winblad, Hans Peter et al**
**H. ALBIHNS PATENTBYRA AB P.O. Box 3137**
**S-103 62 Stockholm (SE)**

## Description

The present invention relates to a device for measuring and checking occasionally the tension forces prevailing at any location along a chain, said device comprising a body which has located at each end thereof a chain link engaging member and which is intended to take-up the tensile load in the chain and relieve the load on the chain section located between said engaging members; and further comprising a means for measuring and indicating the tensile force taken-up by the body, each said chain engaging member being divided by a central slot into two legs which define a pocket into which a chain link can be inserted.

When loads are lifted with the aid of chains, it is sometimes necessary to be able to measure and check quickly the tension forces which prevail in the chain or chains by means of which the load is lifted, to thereby prevent overloading in one of the chain sections or to establish that the load is suspended correctly in relation to its centre of gravity, or to weigh the load directly when a single part chain is used.

GB-A-1 426 965 relates to a device for measuring the tension in a chain. It comprises a body in the form of two parallel bolts carrying two spaced-apart plates, each being movable along the bolts and having a slot with a pocket for receiving and supporting a respective link of a chain. On the ends of the bolts are threaded adjustment nuts so as to adjust the distance between the plates so that the tension in the chain may be relieved and transferred to the bolts. The bolt supports an indicator which indicates the load on the chain. Attaching and detaching such a measuring device therefore requires relatively time consuming and awkward efforts, which is an essential drawback when a rapid load measurement is required. Furthermore, this known construction comprises a large number of components to be assembled which would make it expensive to manufacture. Also, it should be noted that the plane plates do not provide for necessary security against disengagement of the chain links from the pockets. An occasional slacking of the chain may thus easily cause the chain links to slide off the slots and pockets in the plates so that the measuring device becomes disengaged.

One object of the invention is to provide a portable measuring device which can be quickly connected to and detached from the chain at any location therealong, without requiring the chain to be detached from either the lifting hook or the load, and without requiring the use of tools for connecting the device to or detaching the device from the chain.

In accordance with the invention, this object is achieved in that the engaging members have the shape of a hook with hook-shaped legs, in that the pockets are inclined to the longitudinal axis of the body, and in that the openings of said pockets face one another and towards the same side of the body.

Thus, the link-engaging members can be readily hooked sequentially onto a chain subsequent to relieving the load on said chain, so that the chain part located between the engaging members has no load acting thereon and so that the forces acting on the chain when the load is lifted are instead taken-up by the main body of the measuring device. In this case, the measurement indicator will indicate the actual tensile load concerned. When the tensile load has ceased, the device can be detached, by simply unhooking it from the chain.

Each hook-shaped engagement member and the body are preferably formed in one single piece.

The invention will now be described in more detail with reference to the accompanying drawings, in which

Figure 1 is a side view of the inventive device attached to a chain shown in dash dotted lines; and

Figure 2 is a side view of the device seen in the direction of the arrow A in Figure 1.

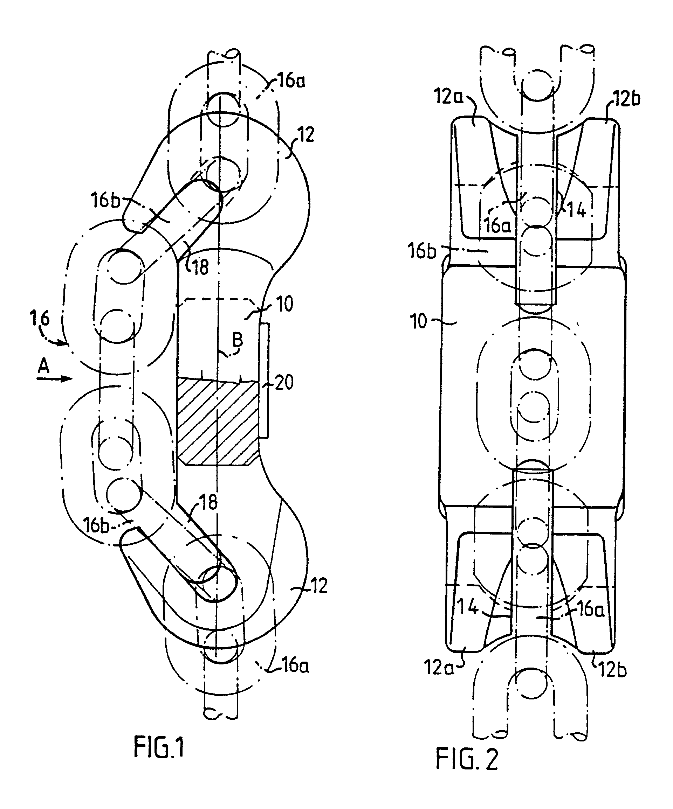

The inventive device intended for measuring and checking tension forces at any desired location along a chain includes an elongated main body part 10 which has a bifurcate claw 12 provided at each end thereof. Each claw 12 has two legs 12a, 12b which define centrally therebetween a groove or slot 14 (Figure 2) which is intended to receive a chain link 16a of a chain 16. The claw legs 12a, 12b also define a pocket 18 into which a link 16b connected to the link 16a can be inserted. The pockets 18 have a depth such that when a link 16 is inserted fully into the pocket, the force lines of the chain parts coupled to respective claws 12 will extend in line with the longitudinal symmetry axis B of the main body 10.

The main body 10 has mounted thereon a measuring instrument 20, which is illustrated schematically in Figure 1. The measuring instrument may include, for example, a strain gauge or some other suitable means for detecting the tensile force or strain acting in the main body 10 and therewith in the chain 16, and an indicating means which is connected directly thereto and which indicates the tensile force acting in the chain.

The invention device can be connected to a chain quickly and easily, so as to permit the tension forces acting therein to be checked. The device is attached to the chain by hooking respective claws onto the chain (prior to subjecting the chain to load), so that the tension forces to which the chain is subsequently subjected will be taken-up by the main body 10 through the claws 12. Subsequent to measuring the tensile forces, the device can be unhooked quickly and easily from the chain, after relieving the chain from the load acting thereon.

## Claims

1. A device for measuring and checking occasionally the tensile forces that prevail at any selected location along a chain (16), said device comprising a body (10) which has located at each end thereof a chain link engaging member (12) and which is intended to take-up the tensile load in the chain and relieve the load on the chain section located between said engaging members (12); and further comprising a means (20) for measuring and indicating the tensile force taken-up by the body (10), each said chain engaging member being divided by a central slot (14) into two legs (12a, 12b) which define a pocket (18) into which a chain link (16b) can be inserted, characterized in that the engaging members have the shape of a hook (12) with hook-shaped legs (12a, 12b), in that the pockets (18) are inclined to the longitudinal axis (B) of the body (10), and in that the openings of said pockets face one another and towards the same side of the body.

2. A device according to Claim 1, characterized in that the hook-shaped engaging members (12) and the body (10) are formed in one single piece.

## Patentansprüche

1. Gerät zum gelegentlichen Messen und Überprüfen der an einer ausgewählten Stelle längs einer Kette (16) herrschenden Zugkräfte, wobei das Gerät einen Körper (10) aufweist, der an jedem seiner Enden ein Kettengliedeingriffselement (12) aufweist und zur Aufnahme der Zuglast in der Kette und zur Entlastung der Last des zwischen den Eingriffselementen (12) angeordneten Kettenabschnitts bestimmt ist; und weiterhin Mittel (20) zum Messen und Anzeigen der von dem Körper (10) aufgenommen Zugspannung enthält, wobei jedes Ketteneingriffselement durch einen zentralen Schlitz (14) in zwei Schenkel (12a, 12b) geteilt ist, die eine Tasche (18) bilden, in die ein Kettenglied (16b) eingesetzt werden kann, dadurch gekennzeichnet, daß die Eingriffselemente die Form eines Hakens (12) mit hakenförmigen Schenkeln (12a, 12b) aufweisen, daß die Taschen (18) gegenüber der Längsachse (B) des Körpers (10) geneigt sind, und daß die Öffnungen der Taschen einander und der gleichen Seite des Körpers zugewandt sind.

2. Gerät nach Anspruch 1, dadurch gekennzeichnet, daß die hakenförmigen Eingriffselemente (12) und der Körper (10) einstückig ausgebildet sind.

## Revendications

1. Dispositif pour mesurer et vérifier occasionnellement les efforts de traction qui s'exercent sur un emplacement quelconque choisi le long d'une chaîne (16), ledit dispositif comportant un corps (10) muni à chacune de ses extrémités d'un élément d'engagement (12) faisant maillon de chaîne et qui est prévu pour prendre en charge l'effort de traction qui s'exerce sur la chaîne et décharger la section de chaîne située entre lesdits éléments d'engagement (12) ; qui comporte en outre un moyen (20) pour mesurer et indiquer l'effort de traction pris en charge par le corps (10) chacun desdits éléments d'engagement de la chaîne étant divisé par une rainure centrale (14) en deux bras (12a, 12b) qui définissent une poche (18) dans laquelle peut être inséré un maillon de chaîne (16b), caractérisé en ce que l'élément d'engagement a la forme d'un crochet (12) avec des bras en forme de crochets (12a, 12b), en ce que les poches (18) sont inclinées sur l'axe longitudinal (B) du corps (10) et en ce que les orifices ménagés dans lesdites poches se font face et sont dirigés du même côté du corps.

2. Dispositif selon la revendication 1, caractérisé en ce que les éléments d'engagement (12) en forme de crochet et le corps (10) sont formés en une seule pièce.

FIG.1

FIG. 2